# NEUE EUROPÄISCHE PATENTSCHRIFT

(11) **EP 1 658 450 B2**
(45) Veröffentlichungstag und Bekanntmachung des Hinweises auf die Entscheidung über den Einspruch: **04.01.2012**
(45) Hinweis auf die Patenterteilung: 16.04.2008
(21) Anmeldenummer: 04762428.3
(22) Anmeldetag: 21.07.2004
(51) Int. Cl.: F16G 13/16, B60J 5/06

(54) **ENERGIEFÜHRUNGSKETTENSYSTEM UND SCHIEBETÜRSYSTEM**
POWERED GUIDE CHAIN SYSTEM AND SLIDING DOOR SYSTEM
SYSTEME DE CHAINE DE GUIDAGE D'ELEMENTS DE TRANSPORT D'ENERGIE ET SYSTEME DE PORTE-COULISSANTE

(30) Priorität: 24.07.2003 DE 10333834
(43) Veröffentlichungstag der Anmeldung: 24.05.2006
(73) Patentinhaber: igus GmbH, 51147 Köln (DE)
(72) Erfinder: BLASE, Günter, 51429 Bergisch Gladbach (DE)
(74) Vertreter: Stachow, Ernst-Walther
(86) Internationale Anmeldenummer: PCT/DE2004/001578
(87) Internationale Veröffentlichungsnummer: WO 2005/010400

(56) Entgegenhaltungen:
- DE-A- 19 905 022
- DE-C- 19 948 852
- JP-A- 2003 025 850
- US-B1- 6 174 020

## Beschreibung

Bei der Führung von Kabeln, Schläuchen und dergleichen taucht das Problem auf, diese in Energieführungskettensystemen so zu führen, dass sie einen nicht linearen Weg überbrücken. In der Patentschrift DE 199 48 852 C1 wird ein Energieführungkettensystem für eine Innenschwenktür oder Falttür eines Fahrzeuges offenbart, in der der bewegliche Arm in eine Halterung der Innenschwenktür integriert ist, die in einer längs zur Karosserie verlaufende, linearen Führungsschiene längsverschiebbar und verschwenkbar gelagert ist. Hierbei ist der bewegliche Arm in eine Halterung mit einer Führungsrolle der Innenschwenktür integriert, die in einer längs zur Karosserie verlaufende, linearen Führungsschiene längsverschiebbar und verschwenkbar gelagert ist. Um eine zufriedenstellende Führung der Energieführungskette bzw. Weiterführung der Kabel zu erzielen, ist eine verhältnismäßig komplizierte Konstruktion des beweglichen Armes mit aufwendiger Kabelführung erforderlich. Ferner ist das Energieführungskettesystem gemäß DE 199 48 852 C1 lediglich für eine lineare und nicht für eine nichtlineare Verschiebung des beweglichen Armes in einer nichtlinearen Führungsschiene geeignet. Zudem kann durch eine Exzenterlagerung-der Halterung in der Führungsschiene eine stärkere Belastung der Kabel während des Verfahrens der Innenschwenktür auftreten.

Aufgabe der Erfindung ist daher, ein Energieführungskettensystem bereitzustellen, das eine einfache Verbindung zwischen Energieführungskette und Befestigungsseite und eine verbesserten Führung der Energieführungskette aufweist und das ermöglicht, Kabel, Schläuche und dergleichen so zu führen, dass sie einen nicht-linearen Weg unter geringer mechanischer Beanspruchung überbrücken. Aufgabe der Erfindung ist ferner, ein Schiebetürsystem mit einer sicheren Führung der Energieführungskette bereitzustellen.

In einer Weiterbildung der Erfindung weist der Mitnehmer einen mit dem beweglichen Arm verbundenen Kulissenstein auf, der den beweglichen Anschlusspunkt bildet und in der Durchführung des Führungskanals verschiebbar angeordnet ist. Hierbei steht er mit den Seitenwänden der Durchführung einer Nut-Federverbindung, wobei der Kulissenstein an den den Seitenwänden der Durchführung zugewandten Seiten jeweils eine Nut in Längsrichtung des Führungskanales aufweist, in die die Seitenwände der Durchführung als Feder eingreifen.

Denkbar sind auch andere Profile der Teleskopglieder, die über ihre Querschnittsform ein Verdrehen der Teleskopglieder gegeneinander verhindern, wie beispielsweise Hohlprofile mit polygonem und nicht kreisrundem Querschnitt.

In einer Weiterbildung der Erfindung weist der bewegliche Arm einen Kanal zur Führung der Kabel, Schläuche und dergleichen vom beweglichen Anschlusspunkt zur Befestigungsseite auf. Der Kanal schützt somit die in ihm geführten Kabel, Schläuche und dergleichen. Diese können, um an den veränderbaren Abstand zwischen der Befestigungsseite und dem Führungskanal in einer Wegkomponente quer zur Längsrichtung des Führungskanals angepasst zu werden, in dem Kanal in einer Schlaufe oder in einer flexibel auslenkbaren Spiralform geführt sein. Zur besseren Führung der Kabel kann der Kanal eine Energieführungskette zur Aufnahme von Kabeln, Schläuchen und dergleichen aufweisen, die in dem Kanal fest an der Befestigungsseite beweglichen Armes angeschlossen und an ihrem beweglichen Ende mit dem beweglichen Anschlusspunkt der ersten Energiekette verbunden ist. Hierbei können die beiden Energieführungsketten mit dem zugehörigen Führungskanal bzw. Kanal prinzipiell in einem beliebigen Winkel zueinander angeordnet sein. Bevorzugt werden jedoch Anordnungen, in denen der Führungskanal in Einbaulage in einer waagerechten oder senkrechten Position und der Kanal ebenfalls in einer waagerechten oder senkrechten Position in dem Schiebetürsystem angeordnet sind. Durch die Weiterführung der Kabel, Schläuche und dergleichen in dem Kanal mit der zweiten Energieführungskette werden die Kabel, Schläuche und dergleichen besonders wirkungsvoll gegenüber äußerer mechanischen Belastung geschützt.

Um ein Schiebetürsystem mit einer sicheren Führung einer Energieführungskette bereitzustellen, ist für ein Schiebetürsystem der eingangs genannten Art das oben beschriebene erfindungsgemäße Energieführungskettensystem vorgesehen, das angrenzend an die Türöffnung in der Fahrzeugkarosserie oder der Schiebetür angeordnet ist und zur Führung von Kabeln, Schläuchen oder dergleichen von der Fahrzeugkarosserie zur Schiebetür dient, wobei die Schiebetür bzw. Fahrzeugkarosserie die relativ zum Führungskanal bewegliche Vorrichtung bildet.

Durch den streng linearen Kanal wird eine exakte Geradeausführung der Energieführungskette erzielt. Ferner ist durch den an dem beweglichen Anschlusspunkt angeschlossenen Arm eine weitere Führung der Kabel, Schläuche oder dergleichen in einer Querbewegung zum Führungskanal möglich, die unabhängig von den begrenzten Krümmungsmöglichkeiten einer Energieführungskette nach dem Stand der Technik ist, die eine Verschwenkbarkeit ihrer Glieder quer zur Verschiebungsrichtung erlaubt. Ferner ist in dem vorgeschlagenen Schiebetürsystem die Energieführungskette im Führungskanal nur minimal der Fahrdynamik ausgesetzt, die beispielsweise durch Stöße, Schlingerbewegungen, Schräglagen und Zentrifugalkräften bestimmt wird. Weiterhin schützt der Führungskanal gegen mechanische Beschädigung und Behinderung sowie gegen Schmutz.

In einer besonderen Weiterführung kann der Führungskanal mit einer Dichtlippe so gut wie ganz geschlossen werden, wobei der bewegliche Arm zum Anschluss an den beweglichen Anschlusspunkt dichtend durch die Dichtlippe durchgreifen kann. Ein weiterer Vorteil ist, dass Standard-Energieführungsketten verwendet werden können, die in ihrer Ausführung keine Rücksicht auf eine mögliche Querbewegung zu nehmen brauchen, wobei sie daher je nach Anforderung leichter, kleiner oder auch schwerer und stabiler sein können. Das für das Schiebetürsystem vorgeschlagene Energieführungskettensystem kann nicht nur vorzugsweise im Bodenbereich eingesetzt werden. Eine obere Einbaumöglichkeit, d.h. an der oberen Türkante ist ebenfalls möglich, sodass das vorgeschlagene Energieführungskettensystem je nach Art der Fahrzeugkarosserie an der oberen oder an der unteren Türkante eingebaut werden kann. Vorzugsweise bildet die Schiebetür die relativ zum Führungskanal bewegliche Vorrichtung.

In einer Weiterbildung des Schiebetürsystems ist angrenzend an der Türöffnung der Fahrzeugkarosserie und parallel zu dem relativ zur Fahrzeugkarosserie nicht-linearen Weg der Schiebetür verlaufend mindestens eine entsprechend nicht-lineare Führungsschiene vorgesehen, in der die Schiebetür über eine Haltevorrichtung verschiebbar gelagert ist.

Es wird in einer bevorzugten Weiterbildung des Schiebetürsystems vorgeschlagen, dass die Haltevorrichtung einen am in Fahrtrichtung des Fahrzeuges vorderen Bereich der Schiebetür befestigten Haltearm aufweist, der an seinem freien Ende ein über einen in der Schiebetür angeordneten Motorantrieb antreibbares Ritzel aufweist, und dass in der Führungsschiene eine Zahnstange vorgesehen ist, in die das Ritzel zum Verschieben der Schiebetür eingreift. Hierdurch wird bekannterweise die Schiebetür längs ihres nicht-linearen Weges durch das Ritzel angetrieben, wobei die zu dem Motorantrieb notwendigen Kabel über das erfindungsgemäße Energieführungskettensystem von der Fahrzeugkarosserie zu dem in der Schiebetür angeordneten Motorantrieb geführt werden. Ferner ist denkbar, dass der Motorantrieb über eine bewegliche Antriebswelle mit dem Ritzel verbunden ist.

Selbstverständlich ist denkbar, dass über das Energieführungskettensystem andere Kabel, Schläuche und dergleichen beispielsweise für einen Motorantrieb eines Fensterhebers, zur Beheizung der Scheiben oder zu einer in der Schiebetür angeordneten Scheibenwaschanlage von der Fahrzeugkarosserie in die verschwenkbare Schiebetür geführt werden können.

In einer bevorzugten Ausbildung sind die Zahnstange und die Führungsschiene einstückig gefertigt. Ferner wird vorgeschlagen, dass in einer bevorzugten Weiterbildung die Zahnstange und die Führungsschiene aus Kunststoff gefertigt sind.

In einer Weiterbildung der Erfindung weist die Haltevorrichtung einen am hinteren Bereich der Schiebetür befestigten Schwenkbügel auf, der jeweils um eine in Einbaulage senkrechte Schwenkachse mit der Schiebetür verschwenkbar verbunden ist und mit dem anderen Ende in einer weiteren Führungsschiene verschwenkbar und verschiebbar gelagert ist. Hierbei ist der Schwenkbügel bevorzugt in dem in Fahrtrichtung des Fahrzeuges hinteren Teil der Schiebetür angeordnet. Ferner wird vorgeschlagen, dass die Führung einen Schlitz aufweist, der seitlich nach außen weist und in den der Schwenkbügel in Form eines T-Ankers eingreift.

Anstatt des T-Ankers kann ein Rollensystem vorgesehen sein, das in der Führungsschiene abrollbar angeordnet ist.

Die in der Energieführungskette von dem festen Anschlusspunkt 5 zum beweglichen Anschlusspunkt 6 geführten Kabel 4 werden durch den Mitnehmer 7 und durch den Zapfen 18 durch die Durchführung 9 aus dem Führungskanal 8 nach außen geführt und über den Schiebearm 16 in einer Schlaufe zur Schiebetür geleitet.

Hierbei ist zwischen Schiebetür 14 und der Schlaufe der Kabel 4 eine lösbare Kabelverbindung 21 vorgesehen. Hierdurch sowie durch den zum Kulissenstein 15 hin geöffneten Schlitz 17 des Schiebearms 16 kann die Schiebetür 14 unaufwendig an dem Energieführungskettensystem 3 angeschlossen werden.

Die Erfindung betrifft ein Energieführungskettensystem mit einer Energieführungskette zur Führung von Kabeln, Schläuchen oder dergleichen zwischen einem festen und einem beweglichen Anschlusspunkt, und einem Mitnehmer, mit dem die Energieführungskette über den beweglichen Anschlusspunkt verbunden ist, wobei die Energieführungskette in Form von in zwei parallel zueinander geführten und über einen Umlenkbereich miteinander verbundenen Trums geführt ist, der Mitnehmer einen beweglichen Arm aufweist, der mit einer Befestigungsseite zum Anschluss an eine relativ zum festen Anschlusspunkt bewegliche Vorrichtung von der Energieführungskette vorsteht, der Abstand zwischen der Befestigungsseite und der Energieführungskette in einer Wegkomponente quer zur Längsrichtung der Trums der Energieführungskette veränderbar ist, ein Führungskanal in Form eines Hohlprofiles mit zwei gegenüberliegenden Seitenwänden vorgesehen ist, an denen die Seitenwände der Trums und des Umlenkbereiches der Energieführungskette mit einem geringen Spiel anliegen, das Hohlprofil eine sich in Längsrichtung erstreckende Durchführung für den Mitnehmer aufweist, und der Mitnehmer gänzlich außerhalb des sich zwischen den beiden Trums erstreckenden Raumes angeordnet ist. Die Erfindung betrifft ferner ein Schiebetürsystem für ein Fahrzeug mit einer eine Türöffnung aufweisenden Fahrzeugkarosserie und einer Schiebetür, die zum Öffnen und Schließen längs eines relativ zur Fahrzeugkarosserie nicht-linearen Weges verschiebbar ist.

Dieses Problem wird ferner gemäß US 6,174,020 B1 so gelöst, dass die einzelnen Glieder einer Energieführungskette auch in Querrichtung der Verschiebungsrichtung der Energieführungskette gegeneinander verschwenkbar sind. Hierdurch werden jedoch die in der Energieführungskette geführten Kabel, Schläuche und dergleichen im gleichen Maße gebogen und damit mechanisch beansprucht. Aus der US 6,174,020 B1 ist ebenfalls der Einsatz von derartigen Energieführungsketten in Schiebetürsystemen bekannt. Dabei wird die Energieführungskette bis auf wenige Führungselemente frei in einem Bereich in der Nähe der Türöffnung geführt.

Ein Energieführungskettensystem und ein Schiebetürsystem der eingangs genannten Art ist aus der JP 2003-025850A bekannt. Bei diesem System weist der Mitnehmer, mit dem die in einem Führungskanal geführte Energieführungskette an ihrem beweglichen Ende verbunden ist, einen beweglichen Arm auf, der mit einem Befestigungsende an der Karosserie eines Fahrzeugs angeschlossen ist. Der bewegliche Arm ist als mehrgliedrige Energieführungskette aus schwenkbar miteinander verbundenen Gliedern ausgebildet.

Die JP 11-342807 A offenbart ebenfalls ein Energieführungskettensystem und ein Schiebetürsystem der eingangs genannten Art. Bei diesem System ist der bewegliche Arm als biegsamer flexibler Arm, durch den Kabel von der Fahrzeugskarosserie zur Schiebetür geführt sind, ausgebildet.

Die aus diesen Druckschriften bekannten beweglichen Arme sind unterschiedlichen mechanischen Beanspruchungen, wie Biege- und Torsionsbeanspruchungen, ausgesetzt. Auch werden die in den Armen geführten Kabel im gleichen Maße gebogen und damit mechanisch beansprucht.

Die Aufgabe wird erfindungsgemäß durch ein Energieführungskettensystem mit der Merkmalskombination des Anspruchs 1 gelöst. Eine andere Lösung ist durch ein Energieführungskettensystem mit der Merkmalskombination des Anspruchs 2 gegeben.

Durch die an sich schon durch die beiden vorgenannten Druckschriften bekannte Anordnung des Mitnehmers außerhalb des sich zwischen den beiden Trums erstreckenden Raumes ist es konstruktiv möglich, dass der bewegliche Arm auch in einer nicht der der Energieführungskette entsprechenden Bewegungsform an den beweglichen Anschluss angreifen kann, ohne hierdurch das ordnungsgemäße Verfahren der Energieführungskette zu stören. Da der Abstand zwischen der Befestigungsseite des Armes und dem Mitnehmer veränderbar ist, können die Kabel auf einem Verschiebeweg in Längsrichtung des Führungskanals sowie in einer Wegkomponente quer zur Längsrichtung des Führungskanals, d.h. in einer Bewegung mit zwei linearen Freiheitsgraden, geführt werden. Die Energieführungskette ist an dem in der Durchführung geführten Mitnehmer angeschlossen und liegt bevorzugt mit einem geringen Spiel an den Seitenwänden des Führungskanals an. Somit ist die Energieführungskette im Führungskanal linear geführt, d.h. unter Vermeidung einer Querbewegung in Längsrichtung des Führungskanales verfahrbar. Hierdurch sind die Energieführungskette sowie die in ihr angeordneten Kabel minimal mechanisch belastet. Hierbei bildet der Führungskanal selbst zusätzlich einen Schutzraum für die Energieführungskette und darüber hinaus für ihren beweglichen Anschluss an den Mitnehmer.

Der Führungskanal kann in Einbaulage prinzipiell im beliebigen Winkel zum Fahrzeugboden in dem Schiebetürsystem angeordnet sein. Es wird jedoch eine horizontale oder vertikale Anordnung des Führungskanales bevorzugt, in dem die Energieführungskette dann auf der Seite liegend bzw. vertikal stehend angeordnet ist.

Gemäß der ersten Lösung der oben genannten Aufgabe ist der bewegliche Arm als Teleskoparm ausgebildet.

Gemäß der zweiten Lösung der oben genannten Aufgabe ist der bewegliche Arm als Schiebearm ausgebildet, der in seiner Längsrichtung verschiebbar mit dem beweglichen Anschlusspunkt der Energieführungskette verbunden ist.

Bei der erfindungsgemäßen Ausbildung des beweglichen Arms als Teleskoparm wird eine Konstruktion des Teleskoparmes bevorzugt, die ein äußeres U-förmiges Teleskopglied und ein inneres U-förmiges Teleskopglied aufweist, die über eine Nut-Federverbindung ineinander verschiebbar angeordnet sind. Hierbei sind die beiden U-Profile bevorzugt parallel zueinander angeordnet und greifen mit ihren Schenkeln so ineinander, dass die Schenkel des äußeren Teleskopgliedes außenseitig an den Schenkeln des inneren U-Profiles verschiebbar anliegen. Um eine kraftschlüssige Verbindung in Richtung der Schenkel zu erzielen, ist an der Innenseite der Schenkel des äußeren U-Profiles jeweils eine in Längsrichtung der U-Profile verlaufende Führungsnut vorgesehen, in die an den freien Enden des inneren U-Profiles angeordnete und mit den Führungsnuten korrespondierende Führungsvorsprünge eingreifen und in Längsrichtung verschiebbar gelagert sind. Zur Begrenzung des Verschiebungsweges der U-Profile ineinander sind zweckmäßigerweise Anschläge vorgesehen. Zum Zusammenfügen beider U-Profile zum Teleskoparm wird vorgeschlagen, dass die Schenkel der Teleskopglieder mit ihren freien Enden so elastisch auseinanderbiegbar bzw. zusammendrückbar sind, dass die Vorsprünge an der Innenseite der Schenkel des äußeren Profiles in Längsrichtung der Schenkel zu den Führungsnuten hin verschiebbar sind und in die Führungsnuten einrasten können. Selbstverständlich sind auch andere Anordnungen von Führungsnuten und Führungsvorsprüngen denkbar, die eine Verschiebung der U-Profile ineinander und parallel zu ihrer Längsrichtung erlauben.

Ist der bewegliche Arm gemäß der zweiten erfindungsgemäßen Lösung als Schiebearm ausgebildet, weist der Schiebearm bevorzugt einen in seiner Längsrichtung verlaufenden Schlitz auf, durch den sich ein mit dem beweglichen Anschlusspunkt fest verbundener Zapfen erstreckt. Der Zapfen weist bevorzugt einen Zapfenhals und einen an dem freien Ende angeordneten Zapfenkopf auf, wobei der Schiebearm zur Verbindung des Schiebearmes mit dem beweglichen Anschlusspunkt den Zapfenhals umgreift. Dabei kann der Zapfenhals eine Länge aufweisen, die eine zusätzliche Bewegung des Schiebearmes in Längsrichtung des Zapfens erlaubt. In einer anderen Ausbildung kann der Zapfenkopf als Kugelgelenkkopf ausgebildet sein, an den der Schiebearm mit einer entsprechend ausgebildeten Kugelgelenkschale angreift.

Denkbar ist ferner, dass der Arm so ausgebildet ist, dass er das Prinzip des Teleskoparms und des Schiebearms in Kombination verwirklicht.

Die vorliegende Erfindung wird im Folgenden anhand mehrerer in einer Zeichnung dargestellten Ausführungsbeispiele näher erläutert. In der Zeichnung zeigen
- Fig. 1: ein Energieführungskettensystem in Aufsicht mit einer daran angeschlossenen und in einer Fahrzeugkarosserie eingebetteten Schiebtür,
- Fig. 2: die Anordnung gemäß Fig. 1 in einer Querschnittsansicht,
- Fig. 3: eine Längsschnittansicht des Energieführungskettensystems gemäß Fig. 1,
- Fig. 4: eine weitere Ausbildung des Energieführungskettensystems mit angeschlossener Schiebetür in Aufsicht,
- Fig. 5: das Energieführungskettensystem in Querschnittsansicht,
- Fig. 6: das Energieführungskettensystem in Längsschnittansicht,
- Fig. 7: das Energieführungskettensystem gemäß Fig. 4, jedoch mit herausgeschwenkter Schiebetür,
- Fig. 8: das Energieführungskettensystem gemäß Fig. 5, jedoch mit einem ausgelenkten Teleskoparm,
- Fig. 9: das Energieführungskettensystem gemäß Fig. 6, jedoch in einer anderen Verfahrposition der Energieführungskette,
- Fig. 10: ein Energieführungskettensystem gemäß Fig. 1, jedoch mit einem zusätzlichen Kanal,
- Fig. 11: das Energieführungskettensystem in einer Querschnittsansicht,
- Fig. 12: das Energieführungskettensystem in einer Längsschnittansicht,
- Fig. 13: das Energieführungskettensystem gemäß Fig. 10, jedoch mit herausgeschwenkter Schiebetür,
- Fig. 14: eine Querschnittsansicht des Energieführungskettensystems gemäß Fig. 13,
- Fig. 15: das Energieführungskettensystem gemäß Fig. 13 in einer Längsschnittsansicht,
- Fig. 16: einen Ausschnitt gemäß Fig. 15, jedoch mit einer veränderten Arbeitsposition,
- Fig. 17: ein Energieführungskettensystem gemäß Fig. 10, jedoch mit geschnittenem Kanal und einer waagrecht liegenden Energieführungskette,
- Fig. 18: eine Querschnittsansicht des Energieführungskettensystems gemäß Fig. 17,
- Fig. 19: einen Längsschnitt durch das Energieführungskettensystem gemäß Fig. 17,
- Fig. 20: das Energieführungskettensystemgemäß Fig. 17, jedoch mit herausgeschwenkter Schiebetür,
- Fig. 21: eine Querschnittsansicht des Energieführungskettensystems gemäß Fig. 20,
- Fig. 22: eine Längsschnittansicht des Energieführungskettensystems gemäß Fig. 20,
- Fig. 23: ein Energieführungskettensystem gemäß Fig. 1, jedoch mit herausgeschwenkter Schiebetür,
- Fig. 24: eine Querschnittsansicht des Energieführungskettensystems gemäß Fig. 23,
- Fig. 25: eine Längsschnittansicht des Energieführungskettensystems gemäß Fig. 23 und
- Fig. 26: ein Ausschnitt gemäß Fig. 25, jedoch mit veränderter Arbeitsposition,

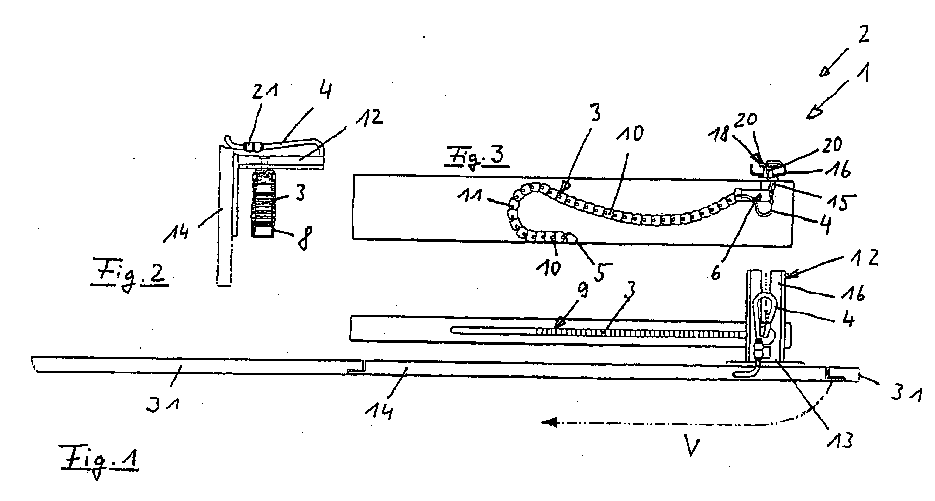

In den Figuren 1 bis 26 werden in verschiedenen Ansichten und Ausschnitten verschiedene Ausführungsformen eines erfindungsgemäßen Energieführungskettensystems 1 gezeigt, das von einem Schiebetürsystem 2 umfasst wird, wobei der Übersicht halber weitere Elemente des Schiebetürsystems 2 lediglich soweit dargestellt werden, wie sie zum Verständnis der Erfindung notwendig sind.

Das Energieführungskettensystem 1 weist eine Energieführungskette 3 zur Führung von Kabeln 4, Schläuchen und dergleichen zwischen einem festen Anschlusspunkt 5 und einem beweglichen Anschlusspunkt 6 auf. Ferner ist ein Mitnehmer 7, mit dem die Energieführungskette 3 über den beweglichen Anschlusspunkt 6 verbunden ist und ein Führungskanal 8 vorgesehen, der ein Hohlprofil mit einer sich in Längsrichtung erstreckenden Durchführung 9 für den Mitnehmer 7 aufweist. Hierbei ist die Energieführungskette 3 in dem Führungskanal 8 in Form von in zwei parallel zueinander geführten und über einen Umlenkbereich 11 miteinander verbundenen Trums 10 in Längsrichtung des Führungskanals 8 geführt. Der Mitnehmer 7 weist einen beweglichen Arm 12 auf, der mit einer Befestigungsseite 13 zum Anschluss an eine relativ zum Führungskanal 8 bewegliche Schiebetür 14 von dem Führungskanal 8 vorsteht, wobei der Abstand zwischen der Befestigungsseite 13 und dem Führungskanal 8 in eine Wegkomponente quer zur Längsrichtung des Führungskanals 8 veränderbar ist.

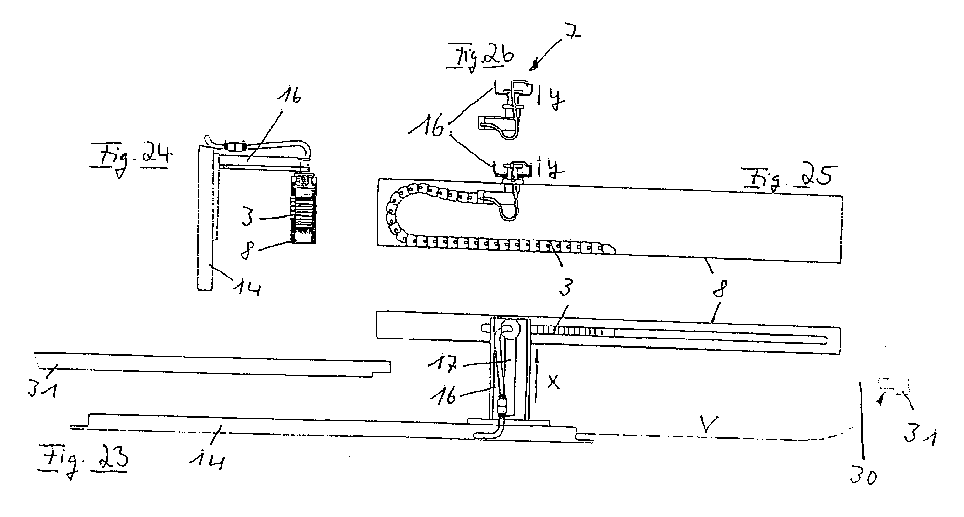

Der Mitnehmer 7 weist einen mit dem beweglichen Arm 12 verbundenen Kulissenstein 15 auf, der den beweglichen Anschlusspunkt 6 bildet und in der Durchführung 9 des Führungskanals 8 verschiebbar angeordnet ist. In den Fign. 1 bis 3 und in den Fign. 23 bis 26 ist der bewegliche Arm 12 als Schiebearm 16 ausgebildet, der in seiner Längsrichtung verschiebbar mit dem beweglichen Anschlusspunkt 6 verbunden ist. Der Schiebearm 16 weist einen in seiner Längsrichtung verlaufenden Schlitz 17 auf, durch den sich ein mit dem beweglichen Anschlusspunkt 6 fest verbundener Zapfen 18 erstreckt. Der Zapfen 18 weist einen Zapfenkopf 19 und einen Zapfenhals 20 auf.

Abweichend von den Fign. 1 bis 3 ist in den Fign. 23 bis 26 die Schiebetür 14 in einer aufgeschwenkten Position gezeigt, d.h. die Schiebetür 15 hat von der in Fig. 1 gezeigten geschlossenen Position zur in Fig. 23 geöffneten Position einen nicht-linaren Schiebeweg V zurückgelegt. In der geöffneten Position ist ferner der Abstand zwischen dem beweglichen Anschlusspunkt 6 und der Befestigungsseite 13 maximal. Wie durch den in Fig. 23 eingezeichneten Pfeil X demonstriert, ist der Schiebearm 16 zum Schließen der Schiebetür 14 in X-Richtung entlang des Zapfens 18 verschiebbar.

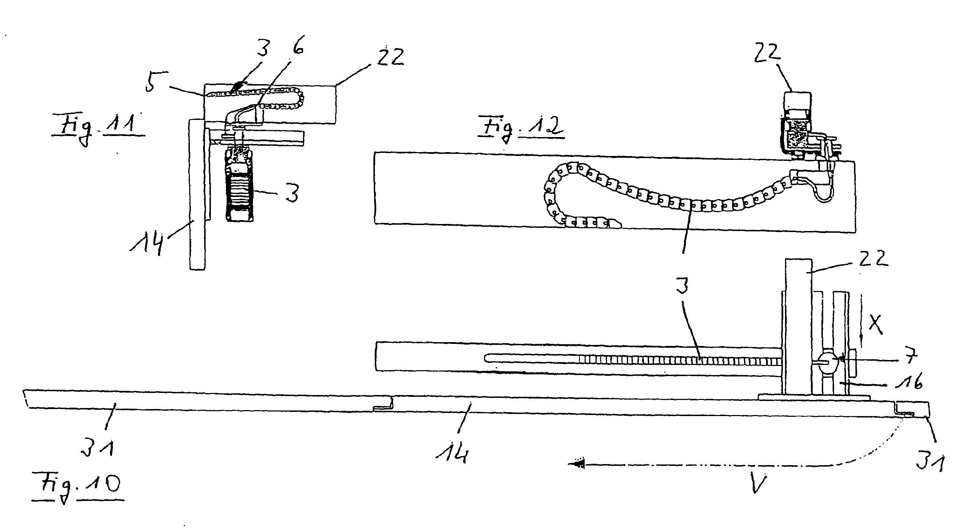

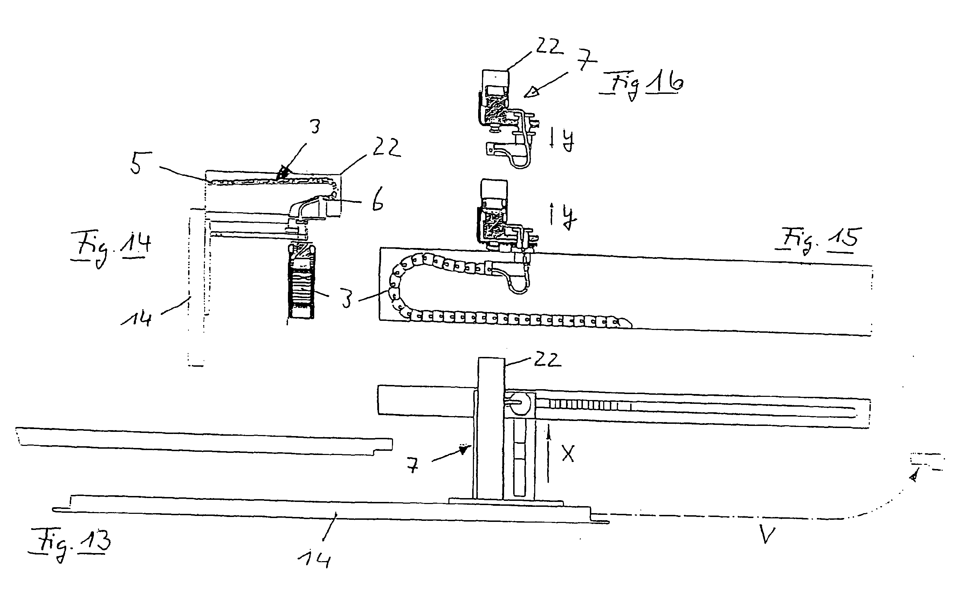

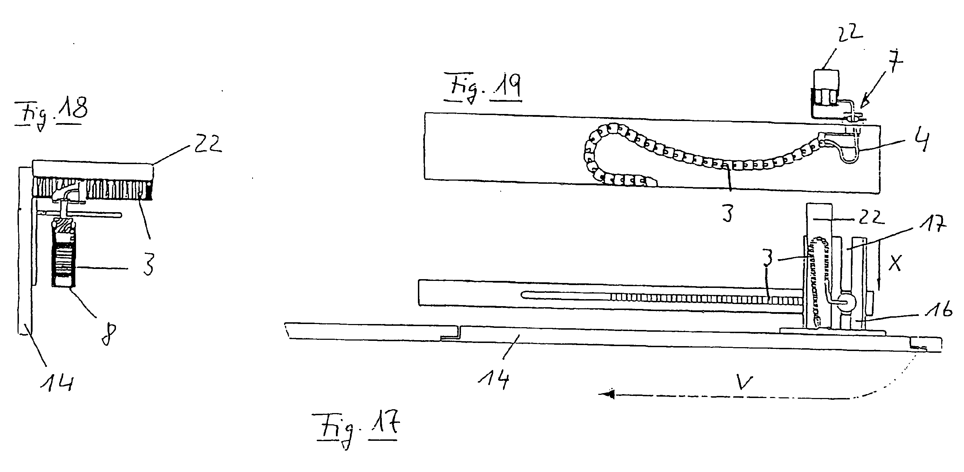

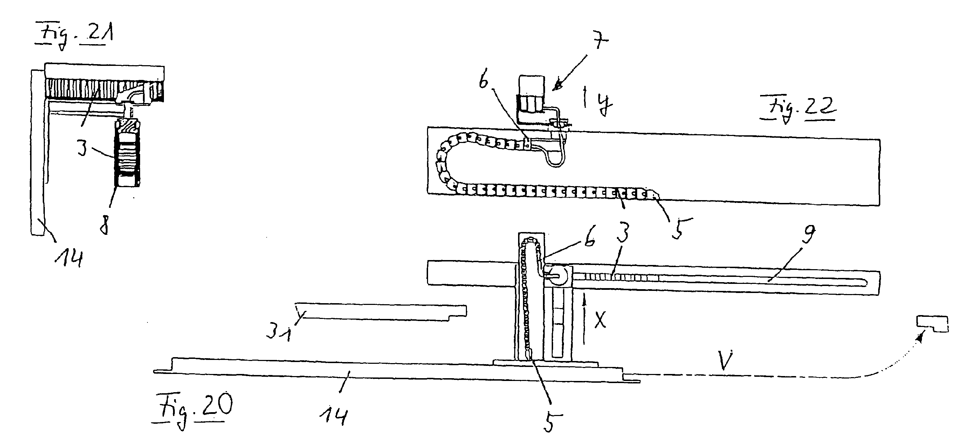

In den Fign. 25 und 26 sind weiterhin zwei verschiedene Positionen des Schiebearms 16 gezeigt, der entlang der eingezeichneten Y-Richtung über den Zapfenhals 20 verschiebbar, d.h. in Einbaulage in Höhenrichtung verschiebbar angeordnet ist. In den Fign. 10 bis 22 ist ein Schiebetürsystem 2 mit einem Energieführungskettensystem 1 dargestellt, wobei sich das Energieführungskettensystem 1 von dem in Fig. 1 bis 3 dargestellten Energieführungskettensystem 1 dadurch unterscheidet, dass der bewegliche Arm 12 einen Kanal 22 zur Führung der Kabel 4, Schläuche und dergleichen vom beweglichen Anschlusspunkt 6 zur Befestigungsseite 13 aufweist. Hierbei ist in dem Kanal eine weitere Energieführungskette 3 zur Aufnahme der Kabel 4, Schläuche und dergleichen angeordnet, die in dem Kanal 22 fest an der Befestigungsseite 13 des beweglichen Armes 12 angeschlossen und an ihrem beweglichen Ende mit dem beweglichen Anschlusspunkt 6 verbunden ist. Hierbei kann, wie in den Fign. 11 und 14 gezeigt, die Energieführungskette 3 eine in Einbaulage stehende Position oder, wie in den Fign. 17, 18, 20 und 21 gezeigt, eine liegende Position aufweisen. Ferner ist, wie schon in den vorangegangenen Figuren beschrieben, das Schiebetürsystem 2 in den Fign. 10 bis 12 und 17 bis 19 mit einer Schiebetür 14 in geschlossener Position und in den Fign. 13 bis 16 und in den Fign. 20 bis 22 mit einer Schiebetür 14 in geöffneter Position gezeigt.

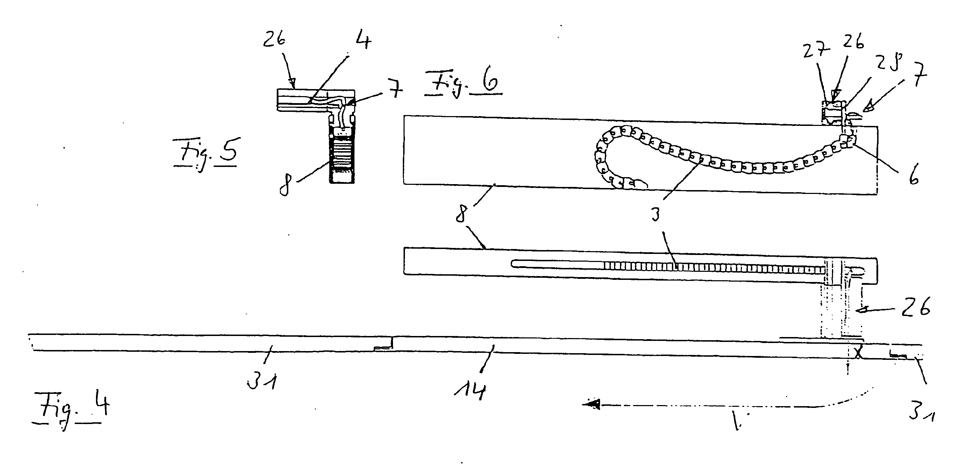

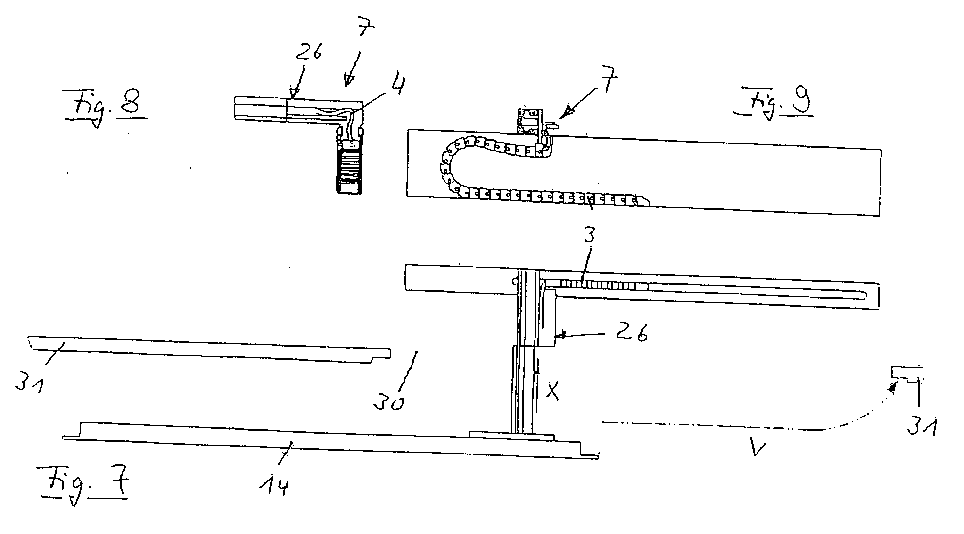

In den Fign. 4 bis 9 wird ein Schiebetürsystem 2 mit einem Energieführungskettensystem 1 gezeigt, wobei der bewegliche Arm 12 als Teleskoparm 26 ausgebildet ist. Dieser weist, wie in den Fign. 4 bis 9 angedeutet, ein äußeres U-förmiges Teleskopglied 27 und ein inneres U-förmiges Teleskopglied 28 auf, die über eine Nut-Feder-Verbindung, wie sie weiter oben bereits beschrieben ist, ineinander verschiebbar angeordnet sind. Wie in den vorangegangenen Beispielen, so ist auch hier das Schiebetürsystem 2 in zwei Positionen, einer geöffneten Position mit geöffneter Schiebetür 14 in den Fign. 7 bis 9 und eine geschlossene Position mit geschlossener Schiebetür 14 in den Fign. 4 bis 6, gezeigt.

### Bezugzeichenliste

- 1: Energieführungskettensystem
- 2: Schiebetürsystem
- 3: Energieführungskette
- 4: Kabel
- 5: Anschlusspunkt
- 6: Anschlusspunkt
- 7: Mitnehmer
- 8: Führungskanal
- 9: Durchführung
- 10: Trum
- 11: Umlenkbereich
- 12: Arm
- 13: Befestigungsseite
- 14: Schiebetür
- 15: Kulissenstein
- 16: Schiebearm
- 17: Schlitz
- 18: Zapfen
- 19: Zapfenkopf
- 20: Zapfenhals
- 21: Kabelverbindung
- 22: Kanal
- 26: Teleskoparm
- 27: Teleskopglied
- 28: Teleskopglied
- 30: Türöffnung
- 31: Fahrzeugkarosserie
- V: Schiebeweg
- Y: Richtung
- X: Richtung

## Patentansprüche

1. Energieführungskettensystem (1) mit einer Energieführungskette (3) zur Führung von Kabeln (4), Schläuchen oder dergleichen zwischen einem festen (5) und einem beweglichen Anschlusspunkt (6), und einem Mitnehmer (7), mit dem die Energieführungskette (3) über den beweglichen Anschlusspunkt (6) verbunden ist, wobei die Energieführungskette (3) in Form von in zwei parallel zueinander geführten und über einen Umlenkbereich (11) miteinander verbundenen Trums (10) geführt ist, der Mitnehmer (7) einen beweglichen Arm (12) aufweist, der mit einer Befestigungsseite (13) zum Anschluss an eine relativ zum festen Anschlusspunkt (5) bewegliche Vorrichtung von der Energieführungskette (3) vorsteht, der Abstand zwischen der Befestigungsseite (13) und der Energieführungskette (3) in einer Wegkomponente quer zur Längsrichtung der Trums (10) der Energieführungskette (3) veränderbar ist, ein Führungskanal (8) in Form eines Hohlprofiles mit zwei gegenüberliegenden Seitenwänden vorgesehen ist, an denen die Seitenwände der Trums (10) und des Umlenkbereiches (11) der Energieführungskette (3) mit einem geringen Spiel anliegen, das Hohlprofil eine sich in Längsrichtung erstreckende Durchführung (9) für den Mitnehmer (7) aufweist, und der Mitnehmer (7) gänzlich außerhalb des sich zwischen den beiden Trums (10) erstreckenden Raumes angeordnet ist, **dadurch gekennzeichnet, dass** der bewegliche Arm (12) als Teleskoparm (26) ausgebildet ist.

2. Energieführungskettensystem (1) mit einer Energieführungskette (3) zur Führung von Kabeln (4), Schläuchen oder dergleichen zwischen einem festen (5) und einem beweglichen Anschlusspunkt (6), und einem Mitnehmer (7), mit dem die Energieführungskette (3) über den beweglichen Anschlusspunkt (6) verbunden ist, wobei die Energieführungskette (3) in Form von in zwei parallel zueinander geführten und über einen Umlenkbereich (11) miteinander verbundenen Trums (10) geführt ist, der Mitnehmer (7) einen beweglichen Arm (12) aufweist, der mit einer Befestigungsseite (13) zum Anschluss an eine relativ zum festen Anschlusspunkt (5) bewegliche Vorrichtung von der Energieführungskette (3) vorsteht, der Abstand zwischen der Befestigungsseite (13) und der Energieführungskette (3) in einer Wegkomponente quer zur Längsrichtung der Trums (10) der Energieführungskette (3) veränderbar ist, ein Führungskanal (8) in Form eines Hohlprofiles mit zwei gegenüberliegenden Seitenwänden vorgesehen ist, an denen die Seitenwände der Trums (10) und des Umlenkbereiches (11) der Energieführungskette (3) mit einem geringen Spiel anliegen, das Hohlprofil eine sich in Längsrichtung erstreckende Durchführung (9) für den Mitnehmer (7) aufweist, und der Mitnehmer (7) gänzlich außerhalb des sich zwischen den beiden Trums (10) erstreckenden Raumes angeordnet ist, **dadurch gekennzeichnet, dass** der bewegliche Arm (12) als Schiebearm (16) ausgebildet ist, der in seiner Längsrichtung verschiebbar mit dem beweglichen Anschlusspunkt (6) verbunden ist.

3. Energieführungskettensystem nach Anspruch 1 oder 2, **dadurch gekennzeichnet, dass** der Mitnehmer (7) einen mit dem beweglichen Arm (12) verbundenen Kulissenstein (15) aufweist, der den beweglichen Anschlusspunkt (6) bildet und in der Durchführung (9) des Führungskanales (8) verschiebbar angeordnet ist.

4. Energieführungskettensystem nach Anspruch 1, **dadurch gekennzeichnet, dass** der Teleskoparm (26) ein äußeres U-förmiges Teleskopglied (27) und ein inneres U-förmiges Teleskopglied (28) aufweist, die über eine Nut-Feder-Verbindung ineinander verschiebbar angeordnet sind.

5. Energieführungskettensystem nach Anspruch 2, **dadurch gekennzeichnet, dass** der Schiebearm (16) einen in seiner Längsrichtung verlaufenden Schlitz (17) aufweist, durch den sich ein mit dem beweglichen Anschlusspunkt (6) fest verbundener Zapfen (18) erstreckt.

6. Energieführungskettensystem nach einem der Ansprüche 1 bis 5, **dadurch gekennzeichnet, dass** der bewegliche Arm (12) einen Kanal (22) zur Führung der Kabel (4), Schläuche und dergleichen vom beweglichen Anschlusspunkt (6) zur Befestigungsseite (13) aufweist.

7. Energieführungskettensystem nach Anspruch 6, **dadurch gekennzeichnet, dass** in dem Kanal (22) eine Energieführungskette (3) zur Aufnahme der Kabel (4), Schläuche und dergleichen angeordnet ist, die in dem Kanal (22) fest an der Befestigungsseite (13) des beweglichen Armes (12) angeschlossen und an ihrem beweglichen Ende mit dem beweglichen Anschlusspunkt (6) verbunden ist.

8. Schiebetürsystem für ein Fahrzeug mit einer eine Türöffnung (30) aufweisenden Fahrzeugkarosserie (31) und einer Schiebetür (14), die zum Öffnen und Schließen längs eines relativ zur Fahrzeugkarosserie (31) nicht-linearen Weges (V) verschiebbar ist, **gekennzeichnet durch** ein Energieführungskettensystem (1) nach einem der Ansprüche 1 bis 7, das angrenzend an die Türöffnung (30) in der Fahrzeugkarosserie (31) oder der Schiebetür (14) angeordnet ist und zur Führung von Kabeln (4), Schläuchen oder dergleichen von der Fahrzeugkarosserie (31) zur Schiebetür (14) dient, wobei die Schiebetür (14) bzw. Fahrzeugkarosserie (31) die relativ zum Führungskanal (8) bewegliche Vorrichtung bildet.

9. Schiebetürsystem nach Anspruch 8, **dadurch gekennzeichnet, dass** angrenzend an die Türöffnung (30) an der Fahrzeugkarosserie (31) und parallel zu dem relativ zur Fahrzeugkarosserie (31) nicht-linearen Weg (V) der Schiebetür (14) verlaufend mindestens eine entsprechend nicht-lineare Führungsschiene vorgesehen ist, in der die Schiebetür (14) über eine Haltevorrichtung verschiebbar gelagert ist.

10. Schiebetürsystem nach Anspruch 9, **dadurch gekennzeichnet, dass** die Haltevorrichtung einen im in Fahrtrichtung des Fahrzeuges vorderen Bereich der Schiebetür (14) befestigten Haltearm (32) aufweist, der an seinem freien Ende ein über einen in der Schiebetür (14) angeordneten Motorantrieb abtreibbares Ritzel aufweist, und dass in der Führungsschiene eine Zahnstange vorgesehen ist, in die das Ritzel zum Verschieben der Schiebetür (14) eingreift.

11. Schiebetürsystem nach Anspruch 10, **dadurch gekennzeichnet, dass** die Zahnstange und die Führungsschiene einstückig gefertigt sind.

12. Schiebetürsystem nach Anspruch 10 oder 11, **dadurch gekennzeichnet, dass** die Zahnstange und die Führungsschiene aus Kunststoff gefertigt sind.

13. Schiebetürsystem nach einem der Ansprüche 9 bis 12, **dadurch gekennzeichnet, dass** die Haltevorrichtung einen im in Fahrtrichtung des Fahrzeuges hinteren Bereich der Schiebetür (14) befestigten Schwenkbügel aufweist, der jeweils um eine in Einbaulage senkrechte Schwenkachse mit der Schiebetür (14) verschwenkbar verbunden ist und mit dem anderen Ende in einer weiteren Führungsschiene verschwenkbar und verschiebbar gelagert ist.

## Claims

1. Powered guide chain system (1) with an energy guiding chain (3) for guiding cables (4), hoses or the like between a stationary connecting point (5) and a moving connecting point (6), and a catch (7) to which the energy guiding chain (3) is connected via the moving connecting point (6), where the energy guiding chain (3) is guided in the form of two strands (10), guided parallel to each other and connected to each other via a deflection zone (11), the catch (7) displays a moving arm (12), a fastening side (13) of which projects from the energy guiding chain (3) for connection to a device moving relative to the stationary connecting point (5), and where the gap between the fastening side (13) and the energy guiding chain (3) is variable in a path component transverse to the longitudinal direction of the strand (10) of the energy guiding chain (3), a guide duct (8) in the form of a hollow section with two opposite side walls is provided, against which the side walls of the strand (10) and the deflection zone (11) of the energy guiding chain (3) are positioned with little clearance, where the hollow section displays a passage (9) for the catch (7), extending in the longitudinal direction, and the catch (7) is located entirely outside the space extending between the two strands (10), **characterised in that** the moving arm (12) is designed as a telescopic arm (26).

2. Powered guide chain system (1) with an energy guiding chain (3) for guiding cables (4), hoses or the like between a stationary connecting point (5) and a moving connecting point (6), and a catch (7) to which the energy guiding chain (3) is connected via the moving connecting point (6), where the energy guiding chain (3) is guided in the form of two strands (10), guided parallel to each other and connected to each other via a deflection zone (11), the catch (7) displays a moving arm (12), a fastening side (13) of which projects from the energy guiding chain (3) for connection to a device moving relative to the stationary connecting point (5), and where the gap between the fastening side (13) and the energy guiding chain (3) is variable in a path component transverse to the longitudinal direction of the strand (10) of the energy guiding chain (3), a guide duct (8) in the form of a hollow section with two opposite side walls is provided, against which the side walls of the strand (10) and the deflection zone (11) of the energy guiding chain (3) are positioned with little clearance, where the hollow section displays a passage (9) for the catch (7), extending in the longitudinal direction, and the catch (7) is located entirely outside the space extending between the two strands (10), **characterised in that** the moving arm (12) is designed as a sliding arm (16) that is connected to the moving connecting point (6) in sliding fashion in its longitudinal direction.

3. Powered guide chain system according to Claim 1 or 2, **characterised in that** the catch (7) displays a sliding block (15), which is connected to the moving arm (12), forms the moving connecting point (6) and is located in the passage (9) of the guide duct (8) in sliding fashion.

4. Powered guide chain system according to Claim 1, **characterised in that** the telescopic arm (26) displays an outer U-shaped telescopic element (27) and an inner U-shaped telescopic element (28) that are designed to slide in each other via a tongue-and-groove connection.

5. Powered guide chain system according to Claim 2, **characterised in that** the sliding arm (16) displays a slit (17) running in its longitudinal direction, through which extends a pin (18) that is rigidly connected to the moving connecting point (6).

6. Powered guide chain system according to one of Claims 1 to 5, **characterised in that** the moving arm (12) displays a duct (22) for guiding the cables (4), hoses and the like from the moving connecting point (6) to the fastening side (13).

7. Powered guide chain system according to Claim 6, **characterised in that** an energy guiding chain (3) for accommodating the cables (4), hoses and the like is located in the duct (22), being rigidly connected to the fastening side (13) of the moving arm (12) in the duct (22), the moving end being connected to the moving connecting point (6).

8. Sliding door system for a vehicle with a vehicle body (31) displaying a door opening (30) and a sliding door (14) that, for opening and closing, can be displaced along a non-linear path (V) relative to the vehicle body (31), **characterised by** a powered guide chain system (1) according to one of Claims 1 to 7, which is located adjacent to the door opening (30) in the vehicle body (31) or the sliding door (14) and serves to guide cables (4), hoses or the like from the vehicle body (31) to the sliding door (14), where the sliding door (14) or the vehicle body (31) forms the device moving relative to the guide duct (8).

9. Sliding door system according to Claim 8, **characterised in that**, adjacent to the door opening (30) on the vehicle body (31) and running parallel to the non-linear path (V) of the sliding door (14) relative to the vehicle body (31), at least one correspondingly non-linear guide rail (29) is provided, in which the sliding door (14) is mounted in sliding fashion via a retaining device.

10. Sliding door system according to Claim 9, **characterised in that** the retaining device displays a retaining arm (32), mounted in the front area of the sliding door (14) as seen in the direction of travel of the vehicle, the free end of which displays a pinion driven by a drive motor located in the sliding door (14), and **in that** a rack is provided in the guide rail, which is engaged by the pinion for sliding the sliding door (14).

11. Sliding door system according to Claim 10, **characterised in that** the rack and the guide rail are of one-piece design.

12. Sliding door system according to Claim 10 or 11, **characterised in that** the rack and the guide rail are made of plastic.

13. Sliding door system according to one of Claims 9 to 12, **characterised in that** the retaining device displays a swivel bracket, mounted in the rear area of the sliding door (14) as seen in the direction of travel of the vehicle, which is connected to the sliding door (14) in swivelling fashion about a swivelling axis that is vertical in the installation position, and the other end of which is mounted in a further guide rail in swivelling and sliding fashion.

## Revendications

1. Système de chaîne de guidage d'énergie (1) comportant une chaîne de guidage d'énergie (3) pour guider des câbles (4), des tuyaux flexibles ou similaires entre un point de raccordement fixe (5) et un point de raccordement mobile (6), et comportant un entraîneur (7) auquel est reliée la chaîne de guidage d'énergie (4) via le point de raccordement mobile (6), la chaîne de guidage d'énergie (3) étant guidée sous la forme de deux brins (10) guidés parallèlement l'un à l'autre et reliés l'un à l'autre via une zone de renvoi (11), l'entraîneur (7) comprenant un bras mobile (12) qui fait saillie de la chaîne de guidage d'énergie (3) par un côté de fixation (13) destiné au raccordement à un dispositif mobile par rapport au point de raccordement fixe (5), et la distance entre le côté de fixation (13) et la chaîne de guidage d'énergie (3) étant variable dans une composante de course transversalement à la direction longitudinale des brins (10) de la chaîne de guidage d'énergie (3), un canal de guidage (8) est prévu sous la forme d'un profilé creux à deux parois latérales opposées contre lesquelles prennent appui avec petit jeu les parois latérales des brins (10) et de la zone de renvoie (11) de la chaîne de guidage d'énergie (3), le profilé creux présentant une traversée (9) s'étendant en direction longitudinale et destinée à l'entraîneur (7), et l'entraîneur (7) est agencé complètement à l'extérieur de l'espace qui s'étend entre les deux brins (10), **caractérisé en ce que** le bras mobile (12) est réalisé sous forme de bras télescopique (26).

2. Système de chaîne de guidage d'énergie (1) comportant une chaîne de guidage d'énergie (3) pour guider des câbles (4), des tuyaux flexibles ou similaires entre un point de raccordement fixe (5) et un point de raccordement mobile (6), et comportant un entraîneur (7) auquel est reliée la chaîne de guidage d'énergie (4) via le point de raccordement mobile (6), la chaîne de guidage d'énergie (3) étant guidée sous la forme de deux brins (10) guidés parallèlement l'un à l'autre et reliés l'un à l'autre via une zone de renvoi (11), l'entraîneur (7) comprenant un bras mobile (12) qui fait saillie de la chaîne de guidage d'énergie (3) par un côté de fixation (13) destiné au raccordement à un dispositif mobile par rapport au point de raccordement fixe (5), et la distance entre le côté de fixation (13) et la chaîne de guidage d'énergie (3) étant variable dans une composante de course transversalement à la direction longitudinale des brins (10) de la chaîne de guidage d'énergie (3), un canal de guidage (8) est prévu sous la forme d'un profilé creux à deux parois latérales opposées contre lesquelles prennent appui avec petit jeu les parois latérales des brins (10) et de la zone de renvoie (11) de la chaîne de guidage d'énergie (3), le profilé creux présentant une traversée (9) s'étendant en direction longitudinale et destinée à l'entraîneur (7), et l'entraîneur (7) est agencé complètement à l'extérieur de l'espace qui s'étend entre les deux brins (10), **caractérisé en ce que** le bras mobile (12) est réalisé sous forme de bras de translation (16) qui est relié en déplacement dans sa direction longitudinale au point de raccordement mobile (6).

3. Système de chaîne de guidage d'énergie selon la revendication 1 ou 2, **caractérisé en ce que** l'entraîneur (7) comprend un coulisseau (15) relié au bras mobile (12), qui constitue le point de raccordement mobile (6) et qui est agencé en déplacement dans la traversée (9) du canal de guidage (8).

4. Système de chaîne de guidage d'énergie selon la revendication 1, **caractérisé en ce que** le bras télescopique (26) présente un organe télescopique extérieur en forme de U et un organe télescopique intérieur (28) en forme de U, qui sont agencés en étant mobiles l'un dans l'autre via une liaison à rainure-et-languette.

5. Système de chaîne de guidage d'énergie selon la revendication 2, en ce que le bras de translation (16) présente une fente (17) s'étendant dans sa direction longitudinale et traversée par un tenon (18) fermement relié au point de raccordement mobile (6).

6. Système de chaîne de guidage d'énergie selon l'une des revendications 1 à 5, **caractérisé en ce que** le bras mobile (12) présente un canal (22) pour guider les câbles (4), les tuyaux flexibles et similaires depuis le point de raccordement mobile (6) jusqu'au côté de fixation (13).

7. Système de chaîne de guidage d'énergie selon la revendication 6, en ce que dans le canal (22) est agencée une chaîne de guidage d'énergie (3) pour recevoir des câbles (4), les tuyaux flexibles et similaires, qui est fermement raccordée au côté de fixation (13) du bras mobile (12) dans le canal (22) et qui est reliée par son extrémité mobile au point de raccordement mobile (6).

8. Système de porte coulissante pour un véhicule comportant une carrosserie de véhicule (31) présentant une ouverture de porte (30), et une porte coulissante (14) qui est mobile en translation pour l'ouverture et pour la fermeture le long d'une course (V) non linéaire par rapport à la carrosserie de véhicule (31), **caractérisé par** un système de chaîne de guidage d'énergie (1) selon l'une des revendications 1 à 7, qui est agencé de façon adjacente à l'ouverture de porte (30) dans la carrosserie de véhicule (31) ou de la porte coulissante (14) et qui sert à guider des câbles (4), des tuyaux flexibles ou similaires depuis la carrosserie de véhicule (31) jusqu'à la porte coulissante (14), la porte coulissante (14) ou la carrosserie de véhicule (31) constituant le dispositif mobile par rapport au canal de guidage (8).

9. Système de porte coulissante selon la revendication 8, **caractérisé en ce qu'**au voisinage de l'ouverture de porte (30), il est prévu au moins un rail de guidage correspondant non linéaire s'étendant sur la carrosserie de véhicule (31) et parallèlement à la course (V), non linéaire par rapport à la carrosserie de véhicule (31), de la porte coulissante, rail dans lequel la porte coulissante (14) est montée en déplacement via un dispositif de maintien.

10. Système de porte coulissante selon la revendication 9, **caractérisé en ce que** le dispositif de maintien comprend un bras de maintien (32) fixé dans la zone, avant en direction de roulement du véhicule, de la porte coulissante (14), bras qui comprend à son extrémité libre un pignon susceptible d'être entraîné via un entraînement motorisé agencé dans la porte coulissante (14), et **en ce que** dans le rail de guidage est prévue une crémaillère dans laquelle s'engage le pignon pour déplacer la porte coulissante (14).

11. Système de porte coulissante selon la revendication 10, **caractérisé en ce que** la crémaillère et le rail de guidage sont fabriqués d'un seul tenant.

12. Système de porte coulissante selon la revendication 10 ou 11, **caractérisé en ce que** la crémaillère et le rail de guidage sont fabriqués en matière plastique.

13. Système de porte coulissante selon l'une des revendications 9 à 12, **caractérisé en ce que** le dispositif de maintien comprend un arceau pivotant fixé dans la zone, arrière en direction de roulement du véhicule, de la porte coulissante(14), arceau qui est relié à la porte coulissante (14) en pouvant pivoter autour d'un axe de pivotement vertical en position montée, et qui est monté en pivotement et en translation de par son autre extrémité dans un autre rail de guidage.
